# EUROPÄISCHE PATENTSCHRIFT

(11) **EP 1 094 873 B1**
(45) Veröffentlichungstag und Bekanntmachung des Hinweises auf die Patenterteilung: **06.05.2004**
(21) Anmeldenummer: 99929176.8
(22) Anmeldetag: 11.06.1999
(51) Int. Cl.: B01D 3/06, C08G 64/40

(54) **VERFAHREN ZUR ISOLIERUNG VON POLYMEREN AUS LÖSUNGEN**
METHOD FOR ISOLATING POLYMERS FROM SOLUTIONS
PROCEDE PERMETTANT D'ISOLER DES POLYMERES DE SOLUTIONS

(30) Priorität: 23.06.1998 DE 19827852
(43) Veröffentlichungstag der Anmeldung: 02.05.2001
(73) Patentinhaber: Bayer MaterialScience AG, 51368 Leverkusen (DE)
(72) Erfinder: CASPER, Clemens, D-47809 Krefeld (DE); WEINSCHENCK, Jörgen, D-47803 Krefeld (DE); KOHLGRÜBER, Klemens, D-51515 Kürten (DE); HEUSER, Jürgen, D-47803 Krefeld (DE); KORDS, Christian, D-47829 Krefeld (DE); ELSNER, Thomas, D-40593 Düsseldorf (DE)
(86) Internationale Anmeldenummer: PCT/EP1999/004023
(87) Internationale Veröffentlichungsnummer: WO 1999/067002

(56) Entgegenhaltungen:
- EP-A- 0 045 912
- EP-A- 0 352 727

## Beschreibung

Die Erfindung geht aus von einem Verfahren zum Eindampfen einer Polymerlösung, bei dem die Polymerlösung durch ein beheiztes Wendelrohr und einen daran anschließenden Dampfabscheider strömt.

Bei der Herstellung von Polymeren in Lösung fällt nach der Reaktion eine Lösung an. Aus dieser Lösung ist das Polymer bei Aufrechterhaltung einer hohen Produktqualität so zu isolieren, daß im Endprodukt der Restanteil an Lösungsmittel minimiert wird. Dabei ist eine Reihe von Teilproblemen zu lösen, die oft diametral entgegengesetzte Maßnahmen erfordern.

Das reine Polymer besitzt einen Erweichungspunkt, der oft weit oberhalb der Siedetemperatur des Lösungsmittels liegt. Da die Siedetemperatur der Lösung infolge der sehr unterschiedlichen Molekulargewichte zwischen Polymer und Lösungsmittel bis zu hohen Polymerkonzentrationen hin nahe bei der Siedetemperatur des Lösungsmittels liegt, steigt die Lösungsviskosität während des Prozeßablaufes zunächst stark an und kann Werte weit über 1000 Pas erreichen, was sich in einer schlechten Wärmeübertragung auswirkt, große Durchmischungskräfte erfordert und zum Unterschreiten des Glaspunkts fuhren kann. Erst in der Endphase des Prozesses, wenn der Polymeranteil den Dampfdruck der Lösung wesentlich beeinflußt, steigt die Lösungstemperatur stark an und übersteigt den Erweichungspunkt des Polymers, was sich in einer Abnahme der Viskosität bemerkbar macht. Zum Prozeßende hin geht der konvektive Verdampfungsprozeß in einen Diffusionsprozeß über. In dieser Phase wird eine längere Verweilzeit, eine große Austauschfläche, eine gute Durchmischung des viskosen Produkts und ein hohes Partialdruckgefälle verlangt.

Die meisten Produkte sind thermisch sehr empfindlich; d.h. von dieser Seite her gesehen werden ein niedriges Temperaturniveau und kurze Verweilzeiten gefordert.

Zur Lösung der Aufgabe gibt es bisher zwei grundsätzliche Verfahren:
1. Bei der Sprühtrocknung wird die Lösung aufgeheizt und anschließend mit Hilfe von Strippdampf in einen Trockenturm oder in ein Agglomerationsrohr hinein verdüst. Dabei wird das Lösungsmittel verdampft. Es entsteht ein weitgehend lösungsmittelfreies Pulver, das aber mit Kondensat angereichert ist. Dies erfordert normalerweise eine Nachtrocknung. Hauptnachteil bei diesem Verfahren ist der hohe energetische und apparative Aufwand.
2. Bei dem Eindampfverfahren wird eine Kombination von hintereinander geschalteten Verdampfertypen eingesetzt. Hier ist z. B. die Kombination: Fallfilmverdampfer (Voreindampfung bis 20 Gew.-% Polymer) + Dünnschichtverdampfer (Haupteindampfung bis 50 Gew.-% Polymer) + Doppelwellenschneckenmaschine (Resteindampfung bis 500 µg/g Restlösungsmittel) bekannt.

In neuerer Zeit wird häufig von der Kombination Mehrphasenwendelrohr + Doppelwellenschneckenmaschine Gebrauch gemacht. Das Mehrphasenwendelrohr, das in den Patenten DE 1 667 051 und DE 1 921 045 näher beschrieben wird, beruht im Kern auf einer Flash-Verdampfung und einer nachgeschalteten Verdampfung im indirekt beheizten Wendelrohr. Dem Wendelrohr ist ein Dampfabscheider nachgeschaltet. Um zu hohe Viskositäten zu vermeiden, die zu einer Verstopfung des Rohres fuhren können, wird mit einem Überdruck gearbeitet, der das Temperatumiveau anhebt und damit die Viskosität soweit absenkt, daß die Verstopfungsgefahr gebannt ist. Andererseits ist die Verweilzeit des Produkts im Strömungsrohr so klein, daß keine Produktschädigung eintritt. Auf diese Weise kann in einem Durchlauf die Ausgangslösung im allgemeinen bis auf 70 bis 90 Gew.-% aufkonzentriert werden. Der molare Anteil an Lösungsmittel ist auch bei den hohen Polymerkonzentrationen nahe dem Rohrende noch so groß, daß auch dort die Konvektion und nicht die Diffusion den Verdampfungsprozeß dominiert. Mit der hohen Aufkonzentrierung wird die nachgeschaltete Schneckenmaschine entlastet, was zur Absenkung des Restlösemittelsgehalts im Endprodukt führt. Hauptnachteil bei diesem Verfahren sind die hohen Investkosten für die Schneckenmaschine, der Verschleiß der rotierenden Teile und die vielen Dichtungen, insbesondere die der Brüdendome, ihre Störanfälligkeit infolge der rotierenden Teile und das Handling mit den schweren Maschinenteilen.

Der Erfindung liegt die Aufgabe zugrunde, bei der Aufkonzentrierung von Polymeren den Restanteil an Lösungsmittel oder Monomeren mindestens auf den vom Gesetzgeber zugelassenen, unter 1 Gew. % liegenden Grenzwert zu reduzieren und gleichzeitig die bisher angewandte aufwendige Verfahrenstechnik durch einfachere Methoden zu ersetzen, die mit kostengünstigen Apparaten zu realisieren sind.

Diese Aufgabe wird bei einem Verfahren zum Eindampfen einer Polymerlösung, bei dem die Polymerlösung, die in der Ausgangszusammensetzung mindestens 30 Gew.-% Lösungsmittel und Monomere, vorzugsweise 50 bis 70 Gew.-%, enthält, mit einer Dampfaustrittsgeschwindigkeit von 200 bis 300 m/s durch ein beheiztes Wendelrohr und einen daran anschließenden, beheizten Dampfabscheider geführt wird, erfindungsgemäß dadurch gelöst, daß die Heizmitteltemperaturen im Wendelrohr und im Abscheider auf einen Wert oberhalb des Erweichungspunktes des Polymers gehalten werden und daß das im Wendelrohr gebildete Zweiphasengemisch aus Polymerschmelze und Lösungsmittel- und Monomerdämpfen in den beheizten Dampfabscheider auf einen Druck im Bereich von 10 mbar bis 800 mbar absolut entspannt wird.

Vorteilhaft wird dabei die Heizmitteltemperatur im Wendelrohr und im Abscheider auf einem Wert gehalten, der 10 % bis 30 % über dem Polymerglaspunkt liegt.

Das Verfahren wird ferner vorteilhaft in der Weise ausgeführt, daß die Polymerlösung beim Eintritt in das Wendelrohr einen Druck zwischen 4 bar bis 20 bar hat.

Eine Weiterentwicklung der Erfindung zur Erzielung noch niedrigerer Lösungsmittelrestgehalte besteht darin, daß die Polymerlösung in einem dem Abscheider nachgeschalteten Strangverdampfer bis zu einem Lösungsmittelrestgehalt von 5 µg/g bis 100 µg/g noch weiter eingedampft wird.

Ist der Polymeranteil der Ausgangslösung sehr niedrig, (< 30 Gew.-%), so können zwei oder mehrere Mehrphasenwendelrohrstufen hintereinander geschaltet werden. Ist der Durchsatz sehr hoch, (>5 t/h Polymer), so können zwei oder mehrere Mehrphasenwendelrohrstufen parallel geschaltet werden, wobei jede Stufe mit einem eigenen Pumpensystem ausgerüstet sein muß.

Zur Weiterverarbeitung des aufkonzentrierten Polymers wird das aus der Polymerschmelze bestehende Sumpfprodukt im Abscheider zweckmäßig durch eine breitmaulige Zahnradpumpe oder eine Förderschnecke abgezogen und anschließend in einer Kühlvorrichtung in einen festen granulierten Zustand überführt.

Das erfindungsgemäße Verfahren ist geeignet für Thermoplaste, wie Polycarbonate, Polyestercarbonate, Polyalkylen-terephtalate, EPDM-Polymerisate, Polystyrol und auf der Basis von Styrol, Acrylnitril und Butadien hergestellte Co- und Pfropfcopolymerisate, wie z.B. ABS aber auch für andere Polymere, wie anorganische Silikone.

Der große Vorteil des erfindungsgemäßen Verfahrens liegt darin, daß damit die Invest- und Betriebskosten der sonst üblichen teuren Maschinen entfallen. Damit verbunden sind nicht nur geringere Betriebs- und Investkosten sondern auch eine Reduzierung der thermischen und mechanischen Produktbelastung, was zu einer höheren Produktqualität führt. Liegt der Spezifikationsgrad oberhalb 0, 1 Gew.-%, so reicht das Mehrphasenwendelrohr zusammen mit dem Abscheider für die Lösung der Aufgabe aus. Liegt der geforderte Spezifikationsgrad jedoch unter 0,1 Gew.-%, so wird der Strangverdampfer nachgeschaltet.

Die Erfindung basiert auf folgenden Erkenntnissen:
In einer Reihe von experimentellen Untersuchungen wurde überraschenderweise gefunden, daß man Polymerlösungen im Mehrphasenwendelrohr bis auf Restgehalte an Lösungsmitteln und Monomeren unterhalb 1 Gew.-% aufkonzentrieren kann, ohne daß Verstopfungen und Produktschädigungen auftreten. Dies wird erreicht durch hohe Heizmitteltemperaturen, die oberhalb des Erweichungspunktes der Polymeren liegen, was Anbackungen an der Wand, die Auslöser für Verstopfungen im Rohr und Produktschädigung sein können, verhindert, durch große Strömungsgeschwindigkeiten im Wendelrohr, die bis an die Schallgeschwindigkeit heranreichen und damit für ein hohes Druckniveau und für große Wandscherkräfte sorgen und durch eine nachfolgende Entspannungsverdampfung in den unter Vakuum stehenden Abscheider hinein. Die über dem Glaspunkt liegende Heizmitteltemperatur im Abscheider gewährleistet einen sicheren Austrag des zähen Produkts aus dem System, wenn als Austragsorgan eine beheizte Austragspumpe oder eine Förderschnecke benutzt wird, wobei die Heizmitteltemperaturen dort ebenfalls über dem Glaspunkt liegen müssen. Unter diesen Bedingungen kann der Restlösemittelanteil des Polymers im Mehrphasenwendelrohr zuverlässig und reproduzierbar bis auf unter 1 Gew.-% abgesenkt werden.

Im Folgenden wird die Erfindung an Hand von Ausführungsbeispielen und Zeichnungen näher beschrieben. Es zeigen:
- Fig. 1: ein Fließschema für eine einstufige kontinuierliche Polymereindampfung unter Verwendung eines Wendelrohrs mit einem nachgeschalteten Dampfabscheider und Austragsorgan
- Fig.2: den experimentell bestimmten Restchlorbenzoigehalt von aufkonzentriertem Polycarbonat für verschiedene Versuchsreihen und im Vergleich dazu die unter den Versuchsbedingungen sich einstellenden Restchlorbenzolgehalte im Phasengleichgewichtszustand als Funktion des Drucks im Abscheider und
- Fig. 3: ein Fließschema für eine dreistufige kontinuierliche Polymereindampfung unter Verwendung von zwei Wendelrohrstufen mit Dampfabscheidern und einem nachgeschalteten Strangverdampfer

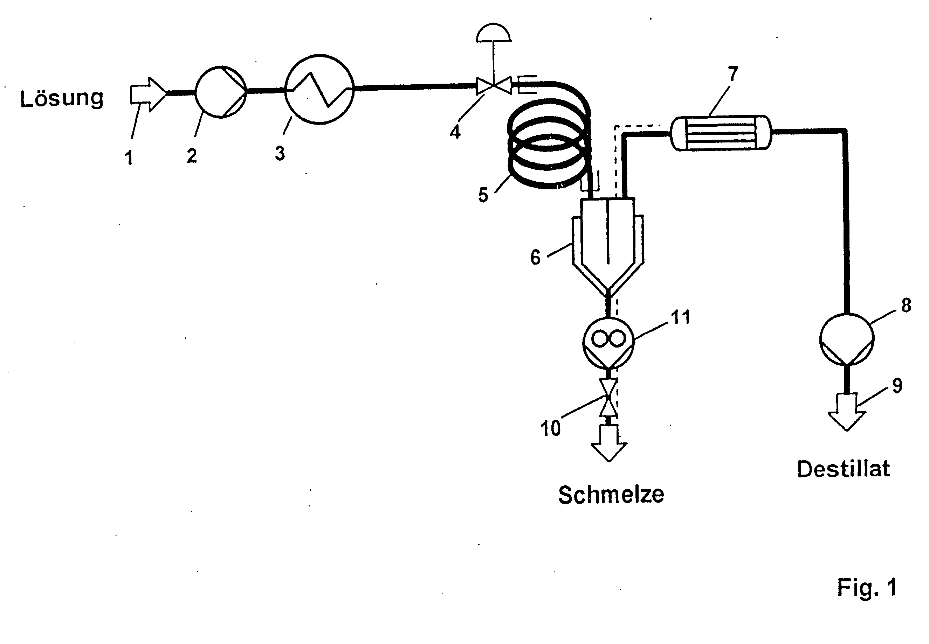

Das Verfahren wird hier am Beispiel der Eindampfung einer Polycarbonatlösung (PC-Lösung) erläutert. Gemäß Fig. 1 wird die aufzukonzentrierende PC-Lösung 1 von der Pumpe 2 durch einen Wärmetauscher 3 gepumpt, im Ventil 4 entspannt und strömt anschließend durch ein Wendelrohr 5 und einen darauffolgenden Dampfabscheider 6, der aus einem handelsüblichen Zyklonabscheider besteht. Sowohl das Wendelrohr 5 als auch der Dampfabscheider 6 sind mit einem Heizmantel versehen, durch den ein Heizmittel bzw. Wärmeträger, z.B. Diphyl THT, strömt. Im Wendelrohr 5 bildet sich aufgrund der Zusammensetzung des Dampf/Flüssigkeitsgemischs und des Druckgefälles und der hohen Temperaturen eine Filmströmung aus, wobei der Dampf am Rohrende Strömungsgeschwindigkeiten von 200 m/s bis 300 m/s erreichen kann. Die im Dampfabscheider 6 abgetrennten Brüden werden im Kondensator 7 kondensiert und mittels der Pumpe 8 als Destillat 9 abgezogen. Als flüssige Phase verbleibt im Dampfabscheider 6 die aufkonzentrierte Polycarbonatschmelze 10, die mit einer ebenfalls beheizten Austragspumpe 11 in einen Pufferbehälter oder gegebenenfalls in weitere Verfahrensstufen gefördert wird. Die Austragspumpe kann aus einer breitmauligen Zahnradpumpe oder einer Förderschnecke bestehen.

Das Wendelrohr 5 hatte einen Innendurchmesser von 15 mm, eine Länge von 6 m, einen mittleren Wendelduchmesser von 284 mm und eine Wendelsteigung von -5,7. Die Innenfläche des Wendelrohrs betrug 0,29 m². Mit dieser Anlage wurden Versuche mit Durchsätzen von 35 bis 85 kg/h PC-Lösung gefahren. Die Temperatur der PC-Lösung nach dem Wärmetauscher betrug 180 °C bei einem Druck von 19 bar. Durch das Ventil 4 wird die PC-Lösung am Eingang des Wendelrohrs 5 auf 3 bis 8 bar entspannt. Die Temperatur betrug an dieser Stelle 150 °C bis 180 °C. Am Eintritt in den beheizten Dampfabscheider 6 wurde das im Wendelrohr 5 enstandene, aus PC-Schmelze und Lösungsmitteldampf bestehende Zweiphasengemisch auf einen Absolutdruck von 10 mbar bis 800 mbar entspannt. Bei dieser Entspannungsverdampfung werden noch einmal schlagartig große Mengen Dampf freigesetzt. Am Austritt des Dampfabscheiders 6 hatte die PC-Schmelze eine Konzentration von 98,1 bis 99,85 Gew.-% bei einer Temperatur von 240 °C bis 260 °C. Die Heizmitteltemperatur; (d.h. die Temperatur des Wärmeträgers im Heizkreislauf des Wendelrohrs 5 und des Dampfabscheiders 6) betrug 300 °C.

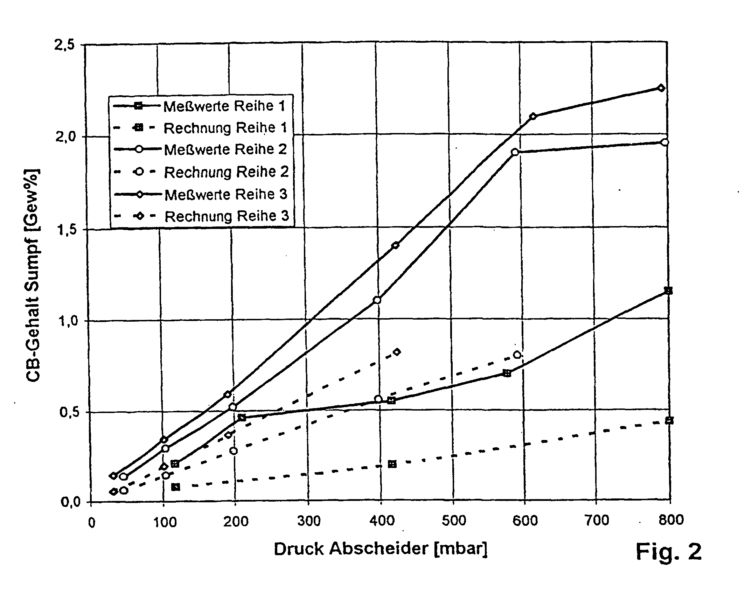

Nachfolgend sind die Randbedingungen für drei Versuchsreihen unter Verwendung dieser Anlage tabellarisch zusammengestellt und die Ergebnisse in dem Diagramm gemäß Fig. 2 grafisch dargestellt. Die einzelnen Versuchsreihen unterscheiden sich durch die Zusammensetzung der Ausgangslösung. In jeder Versuchsreihe wurde der Systemdruck im Abscheider 6 zwischen 10 und 1000 mbar variiert. Der Druck vor der Düse liegt bei 19 bar, der Druck hinter der Düse bei 3 bis 5 bar. Die Druckverluste im Rohr ergeben sich aus der Differenz zwischen dem Druck hinter der Düse und dem Systemdruck.

### 1. Versuchsreihe

| PC-Lösung: | |
|---|---|
| Zusammensetzung der Lösung | 14 Gew.-% PC |
| | 43 Gew.-% Chlorbenzol |
| | 43 Gew.-% Dichlormethan |
| Durchsatz | 43 kg/h |

| Temperaturen: | |
|---|---|
| Beheizung Wärmetauscher 3 | 200°C (Wärmeträger Dampf) |
| Beheizung Wendelrohr 5 | 300°C (Wärmeträger Diphyl THT) |
| Beheizung Abscheider 6 und Austragspumpe 11 | 290°C (Wärmeträger Diphyl THT) |

### 2. Versuchsreihe

| PC-Lösung: | |
|---|---|
| Zusammensetzung der Lösung | 30 Gew.-% PC |
| | 60 Gew.-% Chlorbenzol |
| | 10 Gew.-% Dichlormethan |
| Durchsatz | 38 kg/h |

| Temperaturen: | |
|---|---|
| Beheizung Wärmetauscher 3 | 200°C (Wärmeträger Dampf |
| Beheizung Wendelrohr 5 | 300°C (Wärmeträger Diphyl THT ) |
| Beheizung Abscheider 6 und Austragspumpe 11 | 290°C (Wärmeträger Diphyl THT ) |

### 3. Versuchsreihe

| PC-Lösung: | |
|---|---|
| Zusammensetzung der Lösung | 14 Gew.-% PC |
| | 86 Gew.-% Chlorbenzol |
| Durchsatz | 40 kg/h |

| Temperaturen: | |
|---|---|
| Beheizung Wärmetauscher 3 | 200°C (Wärmeträger Dampf |
| Beheizung Wendelrohr 5 | 300°C (Wärmeträger Diphyl THT ) |
| Beheizung Abscheider 6 und Austragspumpe 11 | 290°C (Wärmeträger Diphyl THT ) |

Die Fig. 2 zeigt die mit Hilfe einer Analyse gemessenen Restgehalte an Lösungsmittel (Chlorbenzol) im Sumpfprodukt am Austrag des Wendelrohres 5. In diesem Diagramm sind auch die theoretisch berechneten Gleichgewichtswerte eingetragen, also die Lösungsmittelgehalte, die bei den vorgegebenen Randbedingungen nicht unterschritten werden können.

Werden noch höhere Anforderungen an die Lösungsmittelfreiheit des Polycarbonats gestellt, so kann dem Abscheider 6 bzw. der Austragspumpe 11 als weitere Verdampferstufe ein Strangverdampfer nachgeschaltet werden. Mit einer derartigen Kombination können Lösungsmittelrestgehalte von unter 0,1 Gew.-% erreicht werden.

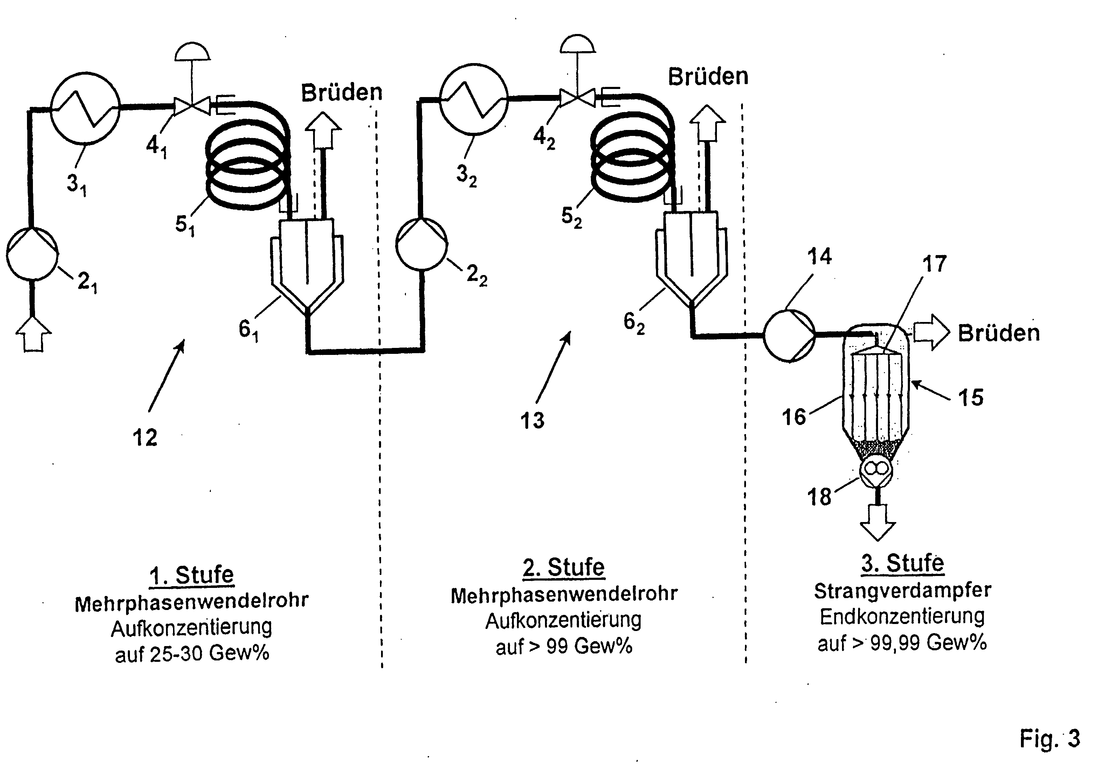

Fig. 3 zeigt ein Fließbild einer mehrstufigen Wendelrohrverdampferanlage mit Dampfabscheidern in Kombination mit einem Strangverdampfer als letzte Stufe. Die beiden hintereinandergeschalteten Mehrphasenwendelrohrstufen 12 und 13 sind völlig analog zu der Anlage gemäß Fig. 1 aufgebaut und bestehen aus den Pumpen 2₁ und 2₂, den Wärmetauschern 3₁ und 3₂ , den Ventilen 4₁ und 4₂, den Mehrphasenwendelrohren 5₁ und 5₂ und den Dampfabscheidern 6₁ und 6₂. Der Ausgang des zweiten Dampfabscheiders 6₂ ist über eine Austragspumpe 14 mit einem zum Stand der Technik gehörenden Strangverdampfer 15 verbunden. Der Strangverdampfer ist ein Diffusionsapparat, der für das Produkt eine große Austauschfläche erzeugen kann. Er besteht im wesentlichen aus einem unter Vakuum stehenden Behälter 16, in dem am oberen Ende eine Düsenplatte 17 und am unteren Ende ein Austragsorgan 18 angebracht sind. In der Düsenplatte 17 werden Produktschmelzefäden erzeugt, die im Behälter 16 abwärts fallen und dann von dem Austragsorgan 18 als Produktschmelze abgeführt werden. Während des Fallvorganges verdampft das Restlösemittel durch Diffusion aus dem Produkt aus. Auf diese Weise kann der Restlösemittelgehalt noch einmal um ein bis zwei Zehnerpotenzen reduziert werden.

Am Eintritt in das erste Wendelrohr 5₁ hat die PC-Lösung eine Temperatur von 200°C. Im Abscheider 6₁ herrscht ein Druck von 2 bar. Die Polycarbonatkonzentration cₚ beträgt 30 Gew.-%. In der zweiten Stufe beträgt die Temperatur im Wendelrohr 5₂ 300 °C und der Druck im Abscheider 6₂ weniger als 0,1 bar. Der cₚ-Wert liegt über 99 Gew.-%. In der dritten Stufe herrscht im Strangverdampfer 15 ein Vakuum von 1 mbar und eine Temperatur von 300 °C. Nach dem Austragsorgan 18 liegt der cₚ-Wert nach der Endkonzentrierung über 99,9 Gew.-%. In der ersten Wendelrohrstufe 12 erfolgt normalerweise eine Aufkonzentrierung auf 25 bis 30 Gew.-%, in der zweiten Wendelrohrstufe 13 auf mehr als 99 Gew.-% und in der Strangverdampferstufe auf mehr als 99,99 Gew.-%. Bei sehr geringen Durchsätzen pro Düsenbohrung, z.B. unter 100 g/l, werden im Strangverdampfer Restlösemittelgehalte von unter 10 ppm erreicht.

An die Eindampfung bzw. Aufkonzentrierung schließt sich normalerweise noch ein Verfahrensschritt zur Abkühlung und Erstarrung der Polymerschmelze an. Zu diesem Zweck wird die heiße Polymerschmelze bei der Ausführung nach Fig. 1 aus dem Dampfabscheider 6 und bei der Ausführung nach Fig. 3 aus dem Strangverdampfer 15 mittels einer Zahnradpumpe mit großer Einzugsfläche oder mittels einer als Fangpumpe ausgebildeten Förderschnecke abgezogen und anschließend auf einem Kühlband oder einer Kühlwalze in dünner Schicht aufgetragen, die zu einem schicht- bzw. plattenförmigen Produkt erstarrt.

### Weiteres Ausführungsbeispiel

An derselben Versuchsanlage wurden Untersuchungen zur Aufkonzentrierung einer Cyclopropancarbonsäureamid (CP -Amid) - Isobutanol - Lösung durchgeführt. Folgende Randbedingungen wurden dabei vorgegeben:
Durchsatz: 15,9 kg/h
Isobutanalanteil in der Ausgangslösung: 44 Gew.-%
Schmelzpunkt von CP-Amid: 120 °C
Heizmittel Wasserdampf
Heizmitteltemperatur in Wärmetauscher 3: 150 °C
Heizmitteltemperatur in Wendelrohr 5: 150 °C
Heizmitteltemperatur in Abscheider 6: 150 °C
Druck vor Düse 4: 11 bar_{abs}
Druck im Abscheider 6: 10 bar_{abs}
Ergebnis: 0,1 Gew.-% Isobutanol im Austrag 10

## Patentansprüche

1. Verfahren zum Eindampfen einer viskosen Polymerlösung mit mindestens 30 Gew.-% Lösungsmitteln und Monomeren, vorzugsweise 50 bis 70 Gew.-%, bei dem die zu verdampfende Polymerlösung als Filmströmung mit einer Dampfaustrittsgeschwindigkeit von von 200 bis 300 m/s durch ein beheiztes Wendelrohr (5) geführt wird und anschließend in einen beheizten Abscheider (6) strömt, **dadurch gekennzeichnet, daß** die Heizmitteltemperaturen im Wendelrohr (5) und im Abscheider (6) auf einem Wert oberhalb des Erweichungspunktes des Polymers gehalten werden und daß das im Wendelrohr (5) gebildete Zweiphasengemisch aus Polymerschmelze und Lösungsmittel- und Monomerdämpfen in den beheizten Dampfabscheider (6) auf einen Druck im Bereich von 10 mbar bis 800 mbar absolut entspannt wird.

2. Verfahren nach Anspruch 1, **dadurch gekennzeichnet, daß** die Temperatur des Heizmittels im Wendelrohr (5) und im Abscheider (6) auf einem Wert gehalten wird, der 10 % bis 30 % über dem Polymerglaspunkt liegt.

3. Verfahren nach Anspruch 1 bis 2, **dadurch gekennzeichnet, daß** die Polymerlösung beim Eintritt in das Wendelrohr (5) auf einem Druck zwischen 4 bar bis 20 bar gehalten wird.

4. Verfahren nach Anspruch 1 bis 3, **dadurch gekennzeichnet, daß** die Polymerlösung in einem dem Abscheider (6, 6₂) nachgeschalteten Strangverdampfer (15) bis zu einem Lösungsmittelrestgehalt von 5 µg/g bis 500 µg/g weiter aufkonzentriert wird.

5. Verfahren nach Anspruch 1 bis 4, **dadurch gekennzeichnet, daß** bei einem Polymeranteil in der Ausgangslösung von weniger als 30 Gew.-% mehrere Mehrphasenwendelrohrstufen hintereinander geschaltet werden.

6. Verfahren nach Anspruch 1 bis 5, **dadurch gekennzeichnet, daß** bei Durchsätzen von mehr als 5 t/h mehrere Mehrphasenwendelrohrstufen parallel geschaltet werden, wobei jede Stufe mit einem eigenen Pumpensystem ausgerüstet ist.

7. Verfahren nach Anspruch 1 bis 6, **dadurch gekennzeichnet, daß** das Sumpfprodukt im Abscheider (6) durch eine Austragspumpe (7) abgezogen wird und anschließend in einer Kühlvorrichtung in einen festen granulierten Zustand überführt wird.

## Claims

1. Process for the evaporation of a viscous polymer solution containing at least 30 wt.% of solvents and monomers, preferably 50 to 70 wt.%, wherein the polymer solution to be evaporated is passed as a film flow, with a vapour exit velocity of 200 to 300 m/s, through a heated helix (5) and then flows through a heated separator (6), **characterized in that** the temperatures of the heating means in the helix (5) and the separator (6) are kept at a value above the softening point of the polymer and **in that** the two-phase mixture of polymer melt and solvent vapours and monomer vapours, formed in the helix (5) is expanded into the heated vapour separator (6) to an absolute pressure in the range 10 mbar to 800 mbar.

2. Process according to claim 1, **characterized in that** the temperature of the heating means in the helix (5) and the separator (6) is kept at a value which is 10% to 30% above the polymer glass transition temperature.

3. Process according to claim 1 or 2, **characterized in that** the polymer solution is kept at a pressure of between 4 bar and 20 bar on entering the helix (5).

4. Process according to any of claims 1 to 3, **characterized in that** the polymer solution is further concentrated, down to a residual solvent content of 5 µg/g to 500 µg/g, in a strand evaporator (15) downstream of the separator (6, 6₂).

5. Process according to any of claims 1 to 4, **characterized in that** if the proportion of polymer in the starting solution is less than 30 wt.%, several multiphase helix stages are connected in series.

6. Process according to any of claims 1 to 5, **characterized in that** if the throughput is more than 5 t/h, several multiphase helix stages are connected in parallel, each stage being equipped with its own pumping system.

7. Process according to any of claims 1 to 6, **characterized in that** the bottom product in the separator (6) is drawn off by means of a discharge pump (7) and then converted to a solid granulated form in a cooling device.

## Revendications

1. Procédé d'évaporation d'une solution visqueuse de polymère avec au moins 30 % en poids de solvant et monomères, de préférence 50 à 70 % en poids, pour lequel la solution de polymère à évaporer est conduite sous forme d'écoulement laminaire avec une vitesse de sortie de vapeur de 200 à 300 m/s à travers un serpentin chauffé (5) et s'écoule ensuite dans un séparateur chauffé (6), **caractérisé en ce que** les températures du fluide caloporteur dans le serpentin (5) et dans le séparateur (6) sont maintenues à une valeur supérieure au point de ramollissement du polymère et que le mélange à deux phases de masse fondue de polymère et vapeurs de solvant et de monomère formé dans le serpentin (5) est détendu dans le séparateur de vapeur (6) chauffé à une pression absolue de l'ordre de 10 mbar à 800 mbar.

2. Procédé suivant la revendication 1, **caractérisé en ce que** la température du fluide caloporteur dans le serpentin (5) et le séparateur (6) est maintenue à une valeur qui est de 10 % à 30 % supérieure à la température de transition vitreuse du polymère.

3. Procédé suivant les revendications 1 à 2, **caractérisé en ce que** la solution de polymère est maintenue à une pression comprise entre 4 et 20 bars à l'entrée dans le serpentin (5).

4. Procédé suivant les revendications 1 à 3, **caractérisé en ce que** la concentration de la solution de polymère se poursuit dans un évaporateur tubulaire (15) branché en aval du séparateur (6, 62) jusqu'à une teneur résiduelle en solvant de 5 µg/g à 500 µg/g.

5. Procédé suivant les revendications 1 à 4, **caractérisé en ce que**, pour une teneur en polymère de moins de 30 % en poids dans la solution de départ, plusieurs étages à serpentin multiphase sont branchés en série.

6. Procédé suivant les revendications 1 à 5, **caractérisé en ce que**, pour des débits de plus de 5 t/h, plusieurs étages à serpentin multiphase sont branchés en parallèle, chaque étage étant équipé de son propre système de pompage.

7. Procédé suivant les revendications 1 à 6, **caractérisé en ce que** le produit de pied dans le séparateur (6) est extrait par une pompe de sortie (7) et est ensuite transformé en granulés solides dans un dispositif de refroidissement.
